# EUROPEAN PATENT APPLICATION

(11) **EP 2 740 526 A1**
(43) Date of publication of application: **11.06.2014**
(21) Application number: 12195938.1
(22) Date of filing: 06.12.2012
(51) Int. Cl.: B01D 53/04, F02M 25/08

(54) **Hydrocarbon emissions capture canister**

(71) Applicant: Delphi Technologies, Inc., Troy, MI 48007 (US)
(72) Inventor: Osmeda, Michal, 32-090 Slomniki (PL); Ortynecki, Wojciech, 30-251 Krakow (PL)
(74) Representative: Allain, Michel Jean Camille

(57) **Abstract**

Hydrocarbon emission capture canister arranged in a fuel system of a vehicle comprising an assembly (10) comprising a container (12) having an aperture (20) closed by a cover (14). The cover (14) is provided with a protrusion (30) and can be arranged over the aperture (20) so the protrusion (30) protrudes inwardly the container (12) minimizing the internal volume of the container (12) or protrudes outwardly the container (12) maximizing the internal volume of the container (12).

## Description

### TECHNICAL FIELD

The present invention relates to a hydrocarbon emission capture canister arranged in a fuel system of a vehicle.

### BACKGROUND OF THE INVENTION

Hydrocarbon emission capture canisters arranged in the fuel line of vehicle mainly comprise a container closed by a cover and filled with activated carbon.

The quantity of activated carbon, and consequently the size of the canister, is adapted to the fuel tank capacity. A 35 litres tank requires a smaller quantity of activated carbon than a 90 litres tank.

Currently, to provide a canister having the necessary quantity of activated carbon, the known solutions are to have canisters of different volumes or to utilize a single canister and, when necessary, to place inside the container a spacer which own volume reduces the internal volume available for the carbon. Also, arranged inside the container, a spring compresses the spacer against the activated carbon so that it is maintained packed.

The downside of this solution is that it requires the manufacturing and managing of multiple containers or spacers. This creates technical and organizational difficulties generating unnecessary costs.

### SUMMARY OF THE INVENTION

Accordingly, it is an object of the present invention to provide an assembly comprising a container having an aperture closed by a cover. The cover is provided with at least one protrusion and can advantageously be arranged over the aperture so the protrusion protrudes inwardly the container minimizing the internal volume of the container or protrudes outwardly the container maximizing the internal volume of the container. The assembly further comprises a separation member arranged inside the container so that the internal volume is split in a cover portion, between the separation member and the cover, and an opposite bottom portion. The separation member is set to be displaceable relative to the cover. An elastic mean, such as a coil spring, solicits the separation member away from the cover. The elastic mean is arranged compressed between the separation member and the cover. Advantageously, the elastic mean is positioned relative to the cover by the protrusion. A material fills the bottom portion, the elastic mean soliciting the separation member against the material.

The invention is also relative to a hydrocarbon emission capture canister comprising an assembly as set in the preceding lines. The cover has at least one protrusion and the elastic mean comprises a coil spring. The container is further provided with an inlet and an outlet so to be arranged in the fuel system of a vehicle, the material is activated carbon. The canister can be arranged with a maximum quantity of carbon when the cover has its protrusion outwardly protruding or can be arranged with a minimum quantity of carbon when the cover has its protrusion inwardly protruding.

### BRIEF DESCRIPTION OF THE DRAWINGS

The present invention is now described by way of example with reference to the accompanying figures in which:
Figure 1 is a general view of a canister made as per the invention arranged so that the activated carbon quantity is maximized.
Figure 2 is the canister of Figure 1 arranged so that the activated carbon quantity is minimized.
Figure 3, placed above Figure 1, is a perspective view of the cover of the canister as arranged in Figure 1.
Figure 4, placed above Figure 2, is a perspective view of the cover of the canister as arranged in Figure 2.

### DESCRIPTION OF THE PREFERRED EMBODIMENTS

In the following description, similar elements could be designated with the same reference numbers.

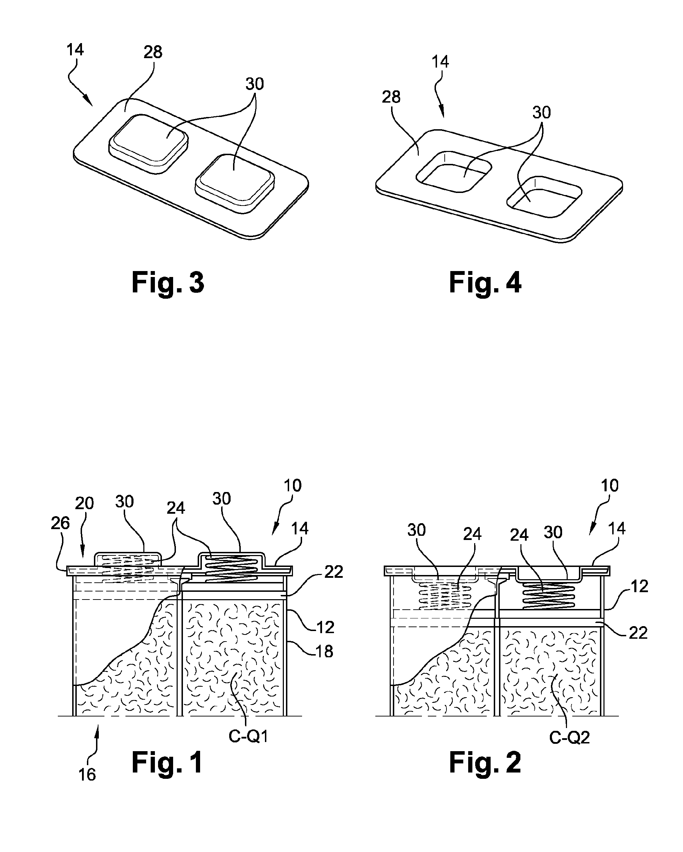

Figure 1 and 2 present a hydrocarbon emission canister 10 comprising a container 12 closed by a cover 14. The container 12 has a bottom wall 16 from which extend four side walls 18 toward a distal end that defines an aperture 20. The side walls 18 slightly enlarge around the aperture 20 for enabling the cover 14 to be positioned inside this enlargement 26. The cover 14 is positioned on the container 12 so to close the aperture 20.

A quantity Q1 of activated carbon C is placed inside the container 12. The carbon C is in granulates or in pellets. Over the carbon C is arranged a separation member 22 usually comprising a plate or a grid and a filter. The separation member 22 is solicited against the carbon C by a pair of compression coil springs 24 that are compressed between the separation member 22 and the cover 14. Alternatively other elastic means such as leaf spring can be utilized.

Also, this description is based upon a substantially a parallelepiped canister. Other geometries, such as cylindrical, oval or polygonal exist and the chosen parallelepiped is just an example which does not intend to limit the scope of the invention. Furthermore, the cover 14 arranged in the enlargement 26 is also one of the multiple ways to arrange a cover on a container.

During the life of the canister 10 the carbon C has a tendency to slightly compact. In order to maintain a correct packing of the carbon C and compensate for its compaction avoiding the creation of voids and channels, the springs 24 constantly solicit the separation member 22 against the carbon C adjusting its position within the container 12. The force generated by the springs 24 must remain within two limits. Below a minimum limit, the force is not sufficient and the pack is not maintained over time enabling undesired voids and channels in the carbon C. Over a maximum limit, the force is such that the carbon C will be crushed. In both cases the canister 10 performance in hydrocarbon emission capture deteriorates.

The cover 14 comprises a main flat portion 28 from which protrude two protrusions 30. In Figure 1 the cover 14 is installed on the container 12 so the protrusions 30 protrude outwardly the container 12. Inside the canister 10, the protrusions 30 form recesses in which are located the springs 30 compressed between the bottom of the recesses and the separation member 22. Figure 3 is a perspective view of the cover 14 as installed in Figure 1.

Advantageously, the cover 14 can be installed over the aperture 20 in the reverse way. Figure 2 presents such arrangement where the same cover 14 is positioned so the protrusions 30 are protruding inwardly the container 12. In this arrangement, the springs 24 are compressed between the top of the protrusions 30 and the separation member 22. Figure 4 is a perspective view of the cover 14 as installed in Figure 2.

The description of two springs adjusted in two protrusions is just an example. Mainly based upon the shape of the canister 10, or the size of the separation member 22, the number of springs and protrusions can be only one or can on be three or even more.

Thanks to the cover 14 that can be arranged one way or the other, the quantity of carbon C inside the container 12 can be maximized Q1 when the cover 14 has its protrusions 30 outwardly protruding - Figure 1 -, or minimized Q2 when the cover 14 has its protrusions 30 inwardly protruding - Figure 2. In both cases the force generated by the springs 24 remains within the desired limits ensuring the correct pack of the carbon C throughout the life of the canister 10.

## Claims

1. Assembly (10) comprising a container (12) having an aperture (20) closed by a cover (14), **characterized in that** the cover (14) is provided with at least one protrusion (30) and can be arranged over the aperture (20) so the protrusion (30) protrudes inwardly the container (12) minimizing the internal volume of the container (12) or protrudes outwardly the container (12) maximizing the internal volume of the container (12).

2. Assembly (10) as set in the preceding claim further comprising a separation member (22) arranged inside the container (12) so that the internal volume is split in a cover portion, between the separation member (22) and the cover (14), and an opposite bottom portion.

3. Assembly (10) as set in claim 2 wherein the separation member (22) is displaceable relative to the cover (14).

4. Assembly (10) as set in any of the claim 2 or 3 further comprising an elastic mean (24) soliciting the separation member (22) away from the cover (14).

5. Assembly (10) as set in claim 4 wherein the elastic mean (24) is arranged compressed between the separation member (22) and the cover (14).

6. Assembly (10) as set in claim 5 wherein the elastic mean (24) is positioned relative to the cover (14) by the protrusion (30).

7. Assembly (10) as set in any of the claim 4 to 6 wherein a material (C) fills the bottom portion, the elastic mean (24) soliciting the separation member (22) against the material (C).

8. Hydrocarbon emission capture canister (10) comprising an assembly as set in claim 7, the cover (14) having at least one protrusion (30), the elastic mean (24) comprising a coil spring, the container (12) being further provided with an inlet and an outlet so to be arranged in the fuel system of a vehicle, the material being activated carbon (C) so the canister (10) can be arranged with a maximum quantity (Q1) of carbon (C) when the cover (14) has its protrusion (30) outwardly protruding or can be arranged with a minimum quantity (Q2) of carbon (C) when the cover (14) has its protrusion (30) inwardly protruding.
